# EUROPEAN PATENT SPECIFICATION

(11) **EP 3 093 169 B1**
(45) Date of publication and mention of the grant of the patent: **11.07.2018**
(21) Application number: 15167861.2
(22) Date of filing: 15.05.2015
(51) Int. Cl.: B62K 5/08, B62K 5/027, B62K 5/00, B60G 21/073, B62K 5/10, B60G 13/00, B60G 13/08

(54) **SUSPENSION MECHANISM**
AUFHÄNGUNGSMECHANISMUS
MÉCANISME DE SUSPENSION

(43) Date of publication of application: 16.11.2016
(73) Proprietor: Motive Power Industry Co., Ltd., Dacun Township, Changhua County 515 (TW)
(72) Inventor: Teng, Ching-Chung, 515 Dacun Township, Changhua County, (TW); Cheng, Hsin-Lin, 515 Dacun Township, Changhua County, (TW)
(74) Representative: Perani & Partners S.p.A.

(56) References cited:
- WO-A1-2009/087595
- US-A- 2 823 927

## Description

### FIELD OF THE INVENTION

The present invention relates to suspension mechanisms, and more particularly, to a suspension mechanism capable of protecting a vehicle against vibration and lending lateral support to the vehicle to thereby prevent the vehicle from tumbling while taking a turn.

### BACKGROUND OF THE INVENTION

There is always a likelihood that a conventional vehicle will tumble while making a turn, for various reasons, such as speeding and a slippery road. The conventional vehicle making a turn maintains its balance mainly by the friction between the road surface and the wheels.

Accordingly, it is imperative to provide a suspension mechanism capable of protecting a vehicle against vibration and lending lateral support to the vehicle to thereby prevent the vehicle from tumbling while taking a turn.

### SUMMARY OF THE INVENTION

In view of the aforesaid drawbacks of the prior art, the inventor of the present invention conducted extensive researches and experiments according to the inventor's years of experience in the related industry, and finally developed a suspension mechanism capable of protecting a vehicle against vibration and lending lateral support to the vehicle to thereby prevent the vehicle from tumbling while taking a turn.

WO 2009/087595 discloses a suspension system for vehicles with three or more wheels. A system of hydraulic cylinders allow shock adsorption and tilting of a vehicle towards the inside of a bend, in order to gain an increased stability. The tilting function is achieved through a hydraulic pipe connecting hydraulic cylinders associated with two different wheels on the same axle. A valve can allow or inhibit an oil flow through the pipe, and then enable or disable the tilting function.

US 2,823,927 discloses a wheel suspension connecting a wheel to the frame of a car. A rotating arm sustains a sleeve whose upper end is closed by an upper end cap telescopically receiving the sleeve. A coil spring is received within the enclosure formed by the sleeve and its associated end cap. A hydraulic shock absorber is positioned on the axis of the coil spring. Trunnions are provided on opposed surfaces of the end cap. Trunnion brackets fixed to the frame provide sleeves or bosses in which the trunnions are positioned.

In order to achieve the above and other objectives, the present invention provides a suspension mechanism, comprising: a left external barrel provided with an upper end having a left port and a lower end having a left damper port and pivotally connected to a chassis; a right external barrel provided with an upper end having a right port and a lower end having a right damper port and pivotally connected to the chassis; a left damper with a lower end pivotally connected to left wheel support unit pivotally connected to the chassis, wherein an outer wall surface at an upper portion of the left damper movably abuts against an inner wall surface at a lower portion of the left external barrel through the left damper port, wherein a left adjustable space is defined inside the upper portion of the left external barrel, adapted to be in communication with the left port, and filled with oil; a right damper with a lower end pivotally connected to right wheel support unit pivotally connected to the chassis, wherein an outer wall surface at an upper portion of the right damper movably abuts against an inner wall surface at a lower portion of the right external barrel through the right damper port, wherein a right adjustable space is defined inside the upper portion of the right external barrel, adapted to be in communication with the right port, and filled with oil; and a control valve connected between the left port and the right port to control a flow of the oil.

As regards the suspension mechanism, two opposing sides of the left external barrel and two opposing sides of the right external barrel have a shaft each and thereby are pivotally connected to the chassis.

As regards the suspension mechanism, the shafts each have a shaft cap and a fixing shaft, wherein the fixing shafts are each fixed to the two opposing sides of the left external barrel and the two opposing sides of the right external barrel and pivotally disposed in the shaft caps, respectively.

Accordingly, the suspension mechanism of the present invention is capable of protecting a vehicle against vibration and lending lateral support to the vehicle to thereby prevent the vehicle from tumbling while taking a turn.

### BRIEF DESCRIPTION OF THE DRAWINGS

Objectives, features, and advantages of the present invention are hereunder illustrated with specific embodiments in conjunction with the accompanying drawings, in which:
FIG. 1 is a cross-sectional view of a preferred embodiment of the present invention;
FIG. 2 is a perspective view of the preferred embodiment of the present invention; and
FIG. 3 is a schematic view of the operation of the preferred embodiment of the present invention.

### DETAILED DESCRIPTION OF THE PREFERRED EMBODIMENTS

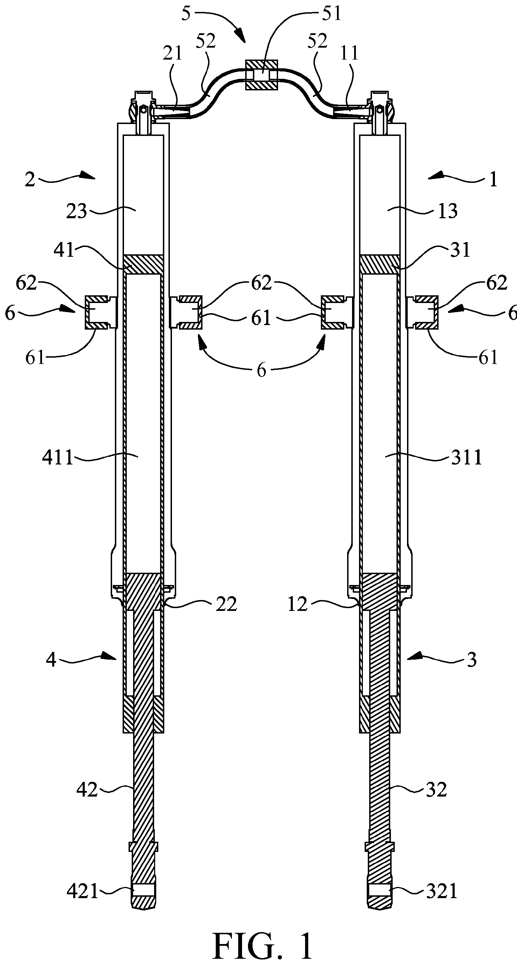

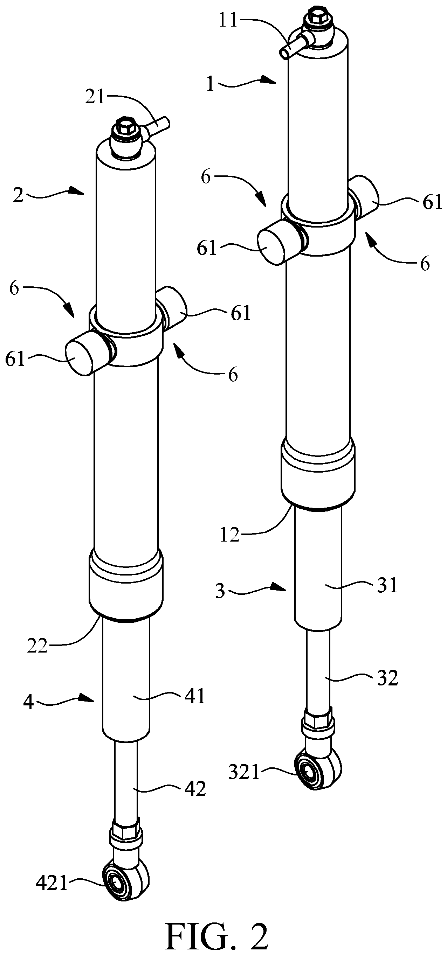

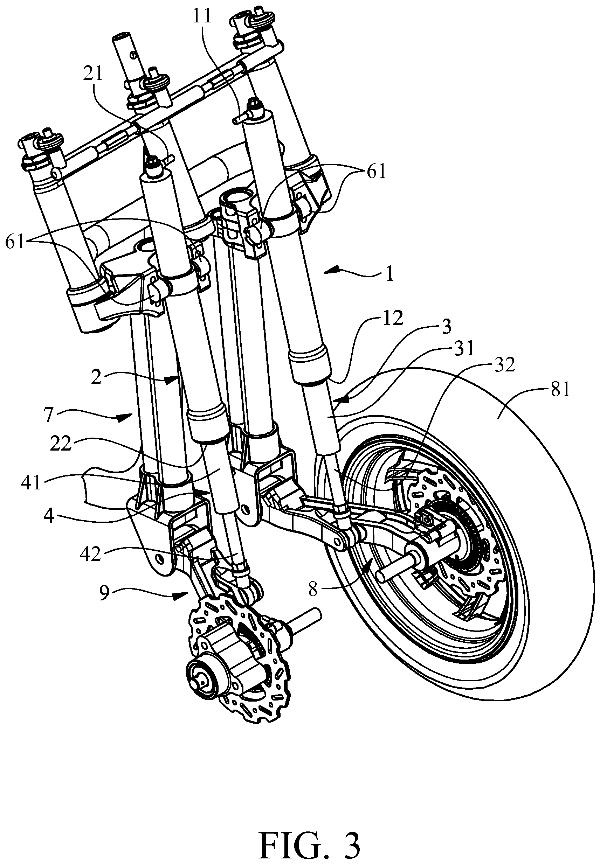

Referring to FIG. 1 through FIG. 3, the present invention provides a suspension mechanism which comprises a left external barrel 1, a right external barrel 2, a left damper 3, a right damper 4, and a control valve 5. As shown in FIG. 1 through FIG. 3, the suspension mechanism of the present invention is for use with the front wheels of a vehicle. However, in practice, the suspension mechanism of the present invention can also be for use with the rear wheels of a vehicle. The upper end of the left external barrel 1 has a left port 11. The left port 11 is a port at one end of a L-shaped pipe. A port at the other end of the L-shaped pipe is in communication with the upper end of the left external barrel 1. The lower end of the left external barrel 1 has a left damper port 12. A chassis 7 is pivotally connected between the two ends of the left external barrel 1. The radial cross-section of the left external barrel 1 is round or of any other geometrical shape. The upper end of the right external barrel 2 has a right port 21. The right port 21 is a port at one end of a L-shaped pipe. A port at the other end of the L-shaped pipe is in communication with the upper end of the right external barrel 2. The lower end of the right external barrel 2 has a right damper port 22. The chassis 7 is pivotally connected between the two ends of the right external barrel 2. The radial cross-section of the right external barrel 2 is round or of any other geometrical shape. The left damper 3 has the same structure and operation mechanism as a conventional damper. The left damper 3 has a left barrel 31 and a left retractable rod 32. The left retractable rod 32 is capable of protruding from and retracting into the left barrel 31. A left receiving space 311 defined by and between the left barrel 31 and the left retractable rod 32 is filled with oil. The lower end of the left retractable rod 32 has a left pivotal connection hole 321 so as to be pivotally connected between two ends of a left wheel support unit 8. One end of the left wheel support unit 8 is pivotally connected to the chassis 7. The other end of the left wheel support unit 8 is pivotally connected to a left wheel 81. The outer wall surface at the upper portion of the left barrel 31 movably abuts against the inner wall surface at the lower portion of the left external barrel 1 through the left damper port 12. A left adjustable space 13 is defined by the top and lateral wall surfaces inside the upper portion of the left external barrel 1 and the outer top wall surface of the left damper 3. The left adjustable space 13 is in communication with the left port 11 and filled with oil. The left adjustable space 13 and the left receiving space 311 are independent of each other but are not in communication with each other, and thus it is impossible for the oil inside the left adjustable space 13 to come into contact with the oil inside the left receiving space 311. A left spring (not shown) fits around the left damper 3. One end of the left spring is fixed to the lower portion of the left barrel 31. The other end of the left spring is fixed to the left retractable rod 32. The right damper 4 is identical to a conventional damper in terms of structure and operation mechanism. The right damper 4 has a right barrel 41 and a right retractable rod 42. The right retractable rod 42 is capable of protruding from and retracting into the right barrel 41. A right receiving space 411 is defined by and between the right barrel 41 and the right retractable rod 42 and filled with oil. The lower end of the right retractable rod 42 has a right pivotal connection hole 421 so as to be pivotally connected between the two end of a right wheel support unit 9. One end of the right wheel support unit 9 is pivotally connected to the chassis 7. The other end of the right wheel support unit 9 is pivotally connected to a right wheel (not shown). The outer wall surface at the upper portion of the right barrel 41 movably abuts against the inner wall surface of the lower portion of the right external barrel 2 through the right damper port 22. A right adjustable space 23 is defined by the top and lateral wall surfaces inside the upper portion of the right external barrel 2 and the outer top wall surface of the right damper 4. The right adjustable space 23 is in communication with the right port 21 and filled with oil. The right adjustable space 23 and the right receiving space 411 are independent of each other but are not in communication with each other, and thus it is impossible for the oil inside the right adjustable space 23 to come into contact with the oil inside the right receiving space 411. A right spring (not shown) fits around the right damper 4. One end of the right spring is fixed to the lower portion of the right barrel 41. The other end of the right spring is fixed to the right retractable rod 42. The two sides of the control valve 5 are connected to the left port 11 and the right port 21, respectively, through a connection pipe 52 each. Hence, the control valve 5, the connection pipes 52, the left adjustable space 13 and the right adjustable space 23 are in communication with each other and filled with oil. Furthermore, the control valve 5 has therein an adjustable communication opening 51 for controlling the oil.

Referring to FIG. 1 through FIG. 3, the adjustable communication opening 51 of the control valve 5 closes to prevent the oil from flowing while the vehicle is moving forward. At this point in time, since the control valve 5, the connection pipes 52, the left adjustable space 13 and the right adjustable space 23 are filled with the oil, both the left adjustable space 13 and the right adjustable space 23 are positioned at the same height because of the oil, so as to lend lateral support to the vehicle moving forward.

The adjustable communication opening 51 of the control valve 5 opens as soon as the vehicle takes a right turn. Since the vehicle taking a right turn always tilts rightward in order to balance itself, the right external barrel 2 presses on the right damper 4; at this point in time, since the adjustable communication opening 51 of the control valve 5 has opened, the right barrel 41 of the right damper 4 exerts an upward thrust on part of the oil in the right adjustable space 23 such that part of the oil is delivered to the left adjustable space 13 through the right port 21, the connection pipe 52 on the right, the adjustable communication opening 51 of the control valve 5, the connection pipe 52 on the left, and the left port 11, and in consequence the right adjustable space 23 is lower than the left adjustable space 13, causing the vehicle to tilt rightward to thereby prevent the vehicle from tumbling while taking a right turn. As indicated above, the vehicle is unlikely to tumble while taking a right turn, because the suspension mechanism of the present invention lends lateral support to the vehicle while the vehicle is taking a right turn. In addition, the suspension mechanism of the present invention is characterized in that the adjustable communication opening 51 of the control valve 5 controls how fast the vehicle tilts rightward such that the more widely the adjustable communication opening 51 of the control valve 5 opens, the faster the oil flows, and the faster the vehicle tilts rightward.

The adjustable communication opening 51 of the control valve 5 opens as soon as the vehicle takes a left turn. Since the vehicle taking a left turn always tilts leftward in order to balance itself, the left external barrel 1 presses on the left damper 3; at this point in time, since the adjustable communication opening 51 of the control valve 5 has opened, the left barrel 31 of the left damper 3 exerts an upward thrust on part of the oil in the left adjustable space 13 such that part of the oil is delivered to the right adjustable space 23 through the left port 11, the connection pipe 52 on the left, the adjustable communication opening 51 of the control valve 5 , the connection pipe 52 on the right, and the right port 21, and in consequence the left adjustable space 13 is lower than the right adjustable space 23, causing the vehicle to tilt leftward to thereby prevent the vehicle from tumbling while taking a left turn. As indicated above, the vehicle is unlikely to tumble while taking a left turn, because the suspension mechanism of the present invention lends lateral support to the vehicle while the vehicle is taking a left turn. In addition, the suspension mechanism of the present invention is characterized in that the adjustable communication opening 51 of the control valve 5 controls how fast the vehicle tilts leftward such that the more widely the adjustable communication opening 51 of the control valve 5 opens, the faster the oil flows, and the faster the vehicle tilts leftward.

As indicated above, the suspension mechanism of the present invention is capable of protecting a vehicle against vibration by the left damper 3 and the right damper 4 and preventing the vehicle from tumbling by the control valve 5, the left adjustable space 13 and the right adjustable space 23 while the vehicle is driven up and down a road.

Referring to FIG. 1 through FIG. 3, the suspension mechanism of the present invention is advantageously characterized in that two shafts 6 are disposed on two opposite sides between the two ends of the left external barrel 1 and pivotally connected to the chassis 7, respectively, and two other shafts 6 are disposed on two opposite sides between the two ends of the right external barrel 2 and pivotally connected to the chassis 7, respectively. Hence, the chassis 7 can be easily connected to the suspension mechanism of the present invention.

Referring to FIG. 1 through FIG. 3, the suspension mechanism of the present invention is also advantageously characterized in that the shafts 6 each have a shaft cap 61 and a fixing shaft 62. The fixing shafts 62 are fixed to the two opposite sides between the two ends of the left external barrel 1, fixed to the two opposite sides between the two ends of the right external barrel 2, and disposed pivotally inside the shaft caps 61, respectively. Hence, the suspension mechanism of the present invention can be easily connected to the shaft caps 61 and the chassis 7.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A suspension mechanism, comprising:
a left external barrel (1) provided with an upper end having a left port (11) and a lower end having a left damper port (12) and pivotally connected to a chassis (7);
a right external barrel (2) provided with an upper end having a right port (21) and a lower end having a right damper port (22) and pivotally connected to the chassis (7);
a left damper (3) with a lower end pivotally connected to left wheel support unit (8) pivotally connected to the chassis (7), wherein an outer wall surface at an upper portion of the left damper (3) movably abuts against an inner wall surface at a lower portion of the left external barrel (1) through the left damper port (12), wherein a left adjustable space (13) is defined inside the upper portion of the left external barrel (1), adapted to be in communication with the left port (11), and filled with oil;
a right damper (4) with a lower end pivotally connected to right wheel support unit (9) pivotally connected to the chassis (7), wherein an outer wall surface at an upper portion of the right damper (4) movably abuts against an inner wall surface at a lower portion of the right external barrel (2) through the right damper port (22), wherein a right adjustable space (23) is defined inside the upper portion of the right external barrel (2), adapted to be in communication with the right port (21), and filled with oil; and
a control valve (5) connected between the left port (11) and the right port (21) to control a flow of the oil,
, **characterized in that**: the left damper (3) has a left barrel (31) and a left retractable rod (32), the left retractable rod (32) is capable of protruding from and retracting into the left barrel (31), a left receiving space (311) defined by and between the left barrel (31) and the left retractable rod (32) is filled with oil, the outer wall surface at the upper portion of the left barrel (31) movably abuts against the inner wall surface at the lower portion of the left external barrel (1) through the left damper port (12), the left adjustable space (13) is defined by the top and lateral wall surfaces inside the upper portion of the left external barrel (1) and the outer top wall surface of the left damper (3), the left adjustable space (13) and the left receiving space (311) are independent of each other but are not in communication with each other; the right damper (4) has a right barrel (41) and a right retractable rod (42), the right retractable rod (42) is capable of protruding from and retracting into the right barrel (41), a right receiving space (411) is defined by and between the right barrel (41) and the right retractable rod (42) and filled with oil, the outer wall surface at the upper portion of the right barrel (41) movably abuts against the inner wall surface of the lower portion of the right external barrel (2) through the right damper port (22), the right adjustable space (23) is defined by the top and lateral wall surfaces inside the upper portion of the right external barrel (2) and the outer top wall surface of the right damper (4), the right adjustable space (23) and the right receiving space (411) are independent of each other but are not in communication with each other.

2. The suspension mechanism of claim 1, wherein two opposing sides of the left external barrel (1) and two opposing sides of the right external barrel (2) have a shaft (6) each and thereby are pivotally connected to the chassis (7).

3. The suspension mechanism of claim 2, wherein the shafts (6) each have a shaft cap (61) and a fixing shaft (62), wherein the fixing shafts (62) are each fixed to the two opposing sides of the left external barrel (1) and the two opposing sides of the right external barrel (2) and pivotally disposed in the shaft caps (61), respectively.

## Patentansprüche

1. Aufhängungsmechanismus, umfassend:
einen linken äußeren Zylinder (1), der mit einem oberen Ende mit einem linken Auslass (11) sowie einem unteren Ende mit einem linken Dämpferauslass (12) versehen ist und schwenkbeweglich mit einem Fahrgestell (7) verbunden ist;
einen rechten äußeren Zylinder (2), der mit einem oberen Ende mit einem rechten Auslass (21) sowie einem unteren Ende mit einem rechten Dämpferauslass (22) versehen ist und
schwenkbeweglich mit dem Fahrgestell (7) verbunden ist;
einen linken Dämpfer (3) mit einem unteren Ende, das schwenkbeweglich mit der linken Radhaltereinheit (8) verbunden ist, die schwenkbeweglich mit dem Fahrgestell (7) verbunden ist,
wobei eine äußere Wandfläche an einem oberen Abschnitt des linken Dämpfers (3) beweglich an einer inneren Wandfläche in einem unteren Abschnitt des linken äußeren Zylinders (1) durch den linken Dämpferauslass (12) anliegt, wobei ein linker einstellbarer Raum (13) im Inneren des oberen Abschnitts des linken äußeren Zylinders (1) definiert und dazu geeignet ist, mit dem linken Auslass (11) in Kommunikation und mit Öl befüllt zu sein;
einen rechten Dämpfer (4) mit einem unteren Ende, das schwenkbeweglich mit der rechten Radhaltereinheit (9) verbunden ist, die schwenkbeweglich mit dem Fahrgestell (7) verbunden ist,
wobei eine äußere Wandfläche an einem oberen Abschnitt des rechten Dämpfers (4) beweglich an einer inneren Wandfläche in einem unteren Abschnitt des rechten äußeren Zylinders (2) durch den rechten Dämpferauslass (22) anliegt, wobei ein rechter einstellbarer Raum (23) im Inneren des oberen Abschnitts des rechten äußeren Zylinders (2) definiert und dazu geeignet ist, mit dem rechten Auslass (21) in Kommunikation und mit Öl befüllt zu sein; und
ein Steuerventil (5), das zwischen dem linken Auslass (11) und dem rechten Auslass (21) verbunden ist, um den Ölfluss zu steuern,
**dadurch gekennzeichnet, dass**: der linke Dämpfer (3) einen linken Zylinder (31) und eine linke rückziehbare Stange (32) aufweist, die linke rückziehbare Stange (32) ist in der Lage, aus dem linken Zylinder (31) auszukragen und darin einzufahren, ein linker Aufnahmeraum (311), der durch und zwischen dem linken Zylinder (31) und der linken rückziehbaren Stange (32) definiert ist, mit Öl gefüllt ist, die äußere Wandfläche im oberen Abschnitt des linken Zylinders (31) beweglich an die innere Wandfläche im unteren Abschnitt des linken äußeren Zylinders (1) durch den linken Dämpferauslass (12) anliegt, der linke einstellbare Raum (13) durch die obere und seitlichen Wandflächen im Inneren des oberen Abschnitts des linken äußeren Zylinders (1) und die äußere obere Wandfläche des linken Dämpfers (3) definiert ist, der linke einstellbare Raum (13) und der linke Aufnahmeraum (311) voneinander unabhängig, aber nicht in Kommunikation miteinander sind; der rechte Dämpfer (4) einen rechten Zylinder (41) und eine rechte rückziehbare Stange (42) aufweist, die rechte rückziehbare Stange (42) in der Lage ist, aus dem rechten Zylinder (41) auszukragen und darin einzufahren, ein rechter Aufhahmeraum (411) durch und zwischen dem rechten Zylinder (41) und der rechten rückziehbaren Stange (42) definiert und mit Öl gefüllt ist, die äußere Wandfläche im oberen Abschnitt des rechten Zylinders (41) beweglich an die innere Wandfläche im unteren Abschnitt des rechten äußeren Zylinders (2) durch den rechten Dämpferauslass (22) anliegt, der rechte einstellbare Raum (23) durch die obere und seitlichen Wandflächen im Inneren des oberen Abschnitts des rechten äußeren Zylinders (2) und die äußere obere Wandfläche des rechten Dämpfers (4) definiert ist, der rechte einstellbare Raum (23) und der rechte Aufnahmeraum (411) voneinander unabhängig, aber nicht in Kommunikation miteinander sind.

2. Aufhängungsmechanismus nach Anspruch 1, wobei zwei gegenüberliegende Seiten des linken äußeren Zylinders (1) und zwei gegenüberliegende Seiten des rechten äußeren Zylinders (2) jeweils eine Welle (6) aufweisen und hierdurch schwenkbeweglich mit dem Fahrgestell (7) verbunden sind.

3. Aufhängungsmechanismus nach Anspruch 2, wobei die Wellen (6) jeweils eine Wellenkappe (61) und eine Befestigungswelle (62) aufweisen, wobei die Befestigungswellen (62) jeweils an den beiden gegenüberliegenden Seiten des linken äußeren Zylinders (1) und den beiden gegenüberliegenden Seiten des rechten äußeren Zylinders (2) befestigt und jeweils schwenkbeweglich in den Wellenkappen (61) angeordnet sind.

## Revendications

1. Mécanisme de suspension comprenant :
un cylindre externe gauche (1) muni d'une extrémité supérieure ayant un orifice gauche (11) et une extrémité inférieure ayant un orifice d'amortisseur gauche (12) et connectée de manière pivotante à un châssis (7) ;
un cylindre externe droit (2) muni d'une extrémité supérieure ayant un orifice droit (21) et une extrémité inférieure ayant un orifice d'amortisseur droit (22) et connectée de manière pivotante au châssis (7) ;
un amortisseur gauche (3) avec une extrémité inférieure connectée de manière pivotante à l'unité de support de roue gauche (8) connectée de manière pivotante au châssis (7), dans lequel une surface de paroi extérieure au niveau d'une partie supérieure de l'amortisseur gauche (3) jouxte de manière mobile une surface de paroi intérieure au niveau d'une partie inférieure du cylindre externe gauche (1) à travers l'orifice d'amortisseur gauche (12), dans lequel un espace réglable gauche (13) est défini à l'intérieur de la partie supérieure du cylindre externe gauche (1), adapté pour être en communication avec l'orifice gauche (11), et rempli avec de l'huile ;
un amortisseur droit (4) avec une extrémité inférieure connectée de manière pivotante à une unité de support de roue droite (9) connectée de manière pivotante au châssis (7), dans lequel une surface de paroi extérieure au niveau d'une partie supérieure de l'amortisseur droit (4) jouxte de manière mobile une surface de paroi intérieure au niveau d'une partie inférieure du cylindre externe droit (2) à travers l'orifice d'amortisseur droit (22), dans lequel un espace réglable droit (23) est défini à l'intérieur de la partie supérieure du cylindre externe droit (2), adapté pour être en communication avec l'orifice droit (21), et rempli avec de l'huile ; et
une vanne de commande (5) connectée entre l'orifice gauche (11) et l'orifice droit (21) pour commander un flux de l'huile,
**caractérisé en ce que** : l'amortisseur gauche (3) a un cylindre gauche (31) et une tige rétractable gauche (32), la tige rétractable gauche (32) est capable de faire saillie hors et se rétracter à l'intérieur du cylindre gauche (31), un espace de réception gauche (311) défini par et entre le cylindre gauche (31) et la tige rétractable gauche (32) est rempli avec de l'huile, la surface de paroi extérieure au niveau de la partie supérieure du cylindre gauche (31) jouxte de manière mobile la surface de paroi intérieure au niveau de la partie inférieure du cylindre externe gauche (1) à travers l'orifice d'amortisseur gauche (12), l'espace réglable gauche (13) est défini par les surfaces de paroi supérieure et latérale à l'intérieur de la partie supérieure du cylindre externe gauche (1) et la surface de paroi supérieure extérieure de l'amortisseur gauche (3), l'espace réglable gauche (13) et l'espace de réception gauche (311) sont indépendants l'un de l'autre mais ne sont pas en communication l'un avec l'autre ; l'amortisseur droit (4) a un cylindre droit (41) et une tige rétractable droite (42), la tige rétractable droite (42) est capable de faire saillie hors et se rétracter à l'intérieur du cylindre droit (41), un espace de réception droit (411) est défini par et entre le cylindre droit (41) et la tige rétractable droite (42) et rempli avec de l'huile, la surface de paroi extérieure au niveau de la partie supérieure du cylindre droit (41) jouxte de manière mobile the surface de paroi intérieure de la partie inférieure du cylindre externe droit (2) à travers l'orifice d'amortisseur droit (22), l'espace réglable droit (23) est défini par les surfaces de paroi supérieure et latérale à l'intérieur de la partie supérieure du cylindre externe droit (2) et la surface de paroi supérieure extérieure de l'amortisseur droit (4), l'espace réglable droit (23) et l'espace de réception droit (411) sont indépendants l'un de l'autre mais ne sont pas en communication l'un avec l'autre.

2. Mécanisme de suspension selon la revendication 1, dans lequel deux côtés opposés du cylindre externe gauche (1) et deux côtés opposés du cylindre externe droit (2) ont chacun un arbre (6) et sont ainsi connectés de manière pivotante au châssis (7).

3. Mécanisme de suspension selon la revendication 2, dans lequel les arbres (6) ont chacun un capuchon d'arbre (61) et un arbre de fixation (62), dans lequel les arbres de fixation (62) sont fixés chacun aux deux côtés opposés du cylindre externe gauche (1) et aux deux côtés opposés du cylindre externe droit (2) et disposés de manière pivotante dans les capuchons d'arbre (61), respectivement.
